# FASCICULE DE BREVET EUROPEEN

(11) **EP 1 447 269 B1**
(45) Date de publication et mention de la délivrance du brevet: **29.09.2010**
(21) Numéro de dépôt: 04290358.3
(22) Date de dépôt: 11.02.2004
(51) Int. Cl.: B60P 3/22

(54) **Dispositif de mise à l'air libre pour une citerne et citerne équipée dudit dispositif**
Vorrichtung für die Entlüftung eines Tanks und Tank mit einer solchen Entlüftungsvorrichting
Venting assembly for a tank and a tank with venting assembly

(30) Priorité: 12.02.2003 FR 0301679
(43) Date de publication de la demande: 18.08.2004
(73) Titulaire: ETABLISSEMENTS MAGYAR S.A., 21004 Dijon Cedex (FR)
(72) Inventeur: Magyar, Georges, 21004 Dijon Cedex (FR)
(74) Mandataire: Novagraaf Technologies

(56) Documents cités:
- WO-A-85/01034
- DE-U- 8 803 444
- DE-U- 9 318 785
- GB-A- 2 352 001
- US-B1- 6 318 402

## Description

La présente invention se rapporte au domaine de la mise à l'air libre des citernes.

La présente invention se rapporte plus particulièrement à un dispositif de mise à l'air libre pour une citerne, et notamment une citerne de camion, de semi-remorque ou de remorque, du type comportant au moins une extrémité proximale reliée avec l'intérieur de ladite citerne et une extrémité distale qui est à l'air libre.

L'art antérieur connaît déjà des dispositifs de mise à l'air du contenu d'une citerne. Typiquement, les citernes sont en général pourvues d'un conduit permettant à l'air présent dans la citerne de s'échapper ou de rentrer lors du remplissage de la citerne ou de sa vidange ou encore lors d'un lavage.

En outre, cette mise à l'air permet d'éviter qu'une surpression ne se forme à l'intérieur de la citerne, par exemple du fait que les gaz présents se réchauffent.

Un inconvénient majeur de ce genre de dispositif est que des saletés peuvent s'introduire dans la citerne par le conduit et venir souiller le fluide stocké dans la citerne.

Cela est d'autant plus gênant lorsque le fluide présent est un liquide alimentaire.

Une solution consiste à cacher l'extrémité distale du conduit, celle qui est en contact avec l'air, afin d'éviter toute projection directe ; toutefois cela ne donne pas complètement satisfaction.

L'idéal serait de pouvoir refermer complètement la citerne, mais alors il y a un risque de surpression ou de dépression.

Le document GB-2 352 001 décrit un dispositif de mise à l'air libre selon le préambule de la revendication 1.

La présente invention entend remédier aux inconvénients de l'art antérieur en proposant un dispositif de mise à l'air qui puisse être ouvert pendant les étapes de remplissage, de vidange ou de lavage de la citerne et fermé en dehors des étapes de remplissage, de vidange ou de lavage, tout en évitant qu'une surpression ou qu'une dépression puisse se former à l'intérieur de la citerne.

Pour ce faire, le dispositif selon l'invention est du type décrit ci-dessus et il est remarquable, dans son acception la plus large, en ce qu'il comporte à son extrémité distale un bouchon étanche, mobile entre une position de fermeture et une position d'ouverture à l'aide d'au moins un vérin, le vérin étant un vérin de pression.

Ledit bouchon est, de préférence, monté sur un levier mobile dont une extrémité est entraînée par ledit vérin.

Ledit levier présente, de préférence, sensiblement une forme de L.

Ledit vérin est un vérin de pression provoquant l'ouverture du bouchon en cas de surpression à l'intérieur du dispositif.

L'extrémité distale du dispositif est, de préférence, orientée sensiblement perpendiculairement à l'extrémité proximale.

Ledit bouchon comporte, de préférence, sur sa face inférieure un opercule équipé d'un joint.

Dans une version préférée, le dispositif de mise à l'air comporte à l'intérieur une boule de projection de liquide permettant le lavage de sa paroi intérieure.

Dans une version également préférée, le dispositif de mise à l'air comporte une sonde de détection de niveau donnant une information de remplissage maximum.

La présente invention se rapporte également à une citerne et notamment une citerne de camion, de semi-remorque ou de remorque, équipée d'un dispositif de mise à l'air libre selon l'invention.

Avantageusement, la présente invention permet de réaliser une mise à l'atmosphère d'une citerne à l'aide d'un dispositif refermable, simple et facile à installer.

Avantageusement également, le dispositif de mise à l'atmosphère, lorsqu'il est refermé, joue le rôle de soupape de surpression et s'ouvre lorsque la pression interne est supérieure à une valeur déterminée.

Avantageusement également, le dispositif de mise à l'atmosphère permet de contrôler le niveau de fluide à l'intérieur de la citerne et peut provoquer, grâce à une sondé de niveau, l'interruption du pompage du fluide.

On comprendra mieux l'invention à l'aide de la description, faite ci-après à titre purement explicatif, d'un mode de réalisation de l'invention, en référence aux figures annexées :
- la figure 1 illustre une vue en coupe longitudinale du dispositif selon l'invention ;
- la figure 2 illustre une vue de dessus, partielle, du dispositif selon l'invention ;
- la figure 3 illustre une vue avant du dispositif selon l'invention ;
- la figure 4 illustre une vue en coupe selon AA de la figure 1 ;
- la figure 5 illustre une vue en coupe selon BB de la figure 1 ;
- les figures 6 et 7 illustrent respectivement une chape d'articulation pliée et à plat avant pliage ;
- la figure 8 illustre un levier d'articulation ;
- la figure 9 illustre une plaque de support du levier d'articulation ;
- la figure 10 illustre une vue en coupe d'un opercule ;
- la figure 11 illustre une platine de fixation du vérin ;
- les figures 12 et 13 illustrent respectivement une vue en coupe et une vue de dessus d'un bouchon de fermeture de l'extrémité distale du dispositif selon l'invention ;
- la figure 14 illustre une vue en coupe d'un axe de fixation du bouchon sur le levier ;
- la figure 15 illustre une vue en coupe selon CC de la figure 2 ;
- les figures 16 et 17 illustrent un tuyau de distribution interne ;
- les figures 18 et 19 illustrent respectivement une vue de côté et une vue en coupe selon DD de la figure 19 du tube d'extrémité proximale du dispositif selon l'invention ; et
- les figures 20 et 21 illustrent respectivement une vue de côté et une vue selon E de la figure 20 du tube d'extrémité distale du dispositif selon l'invention.

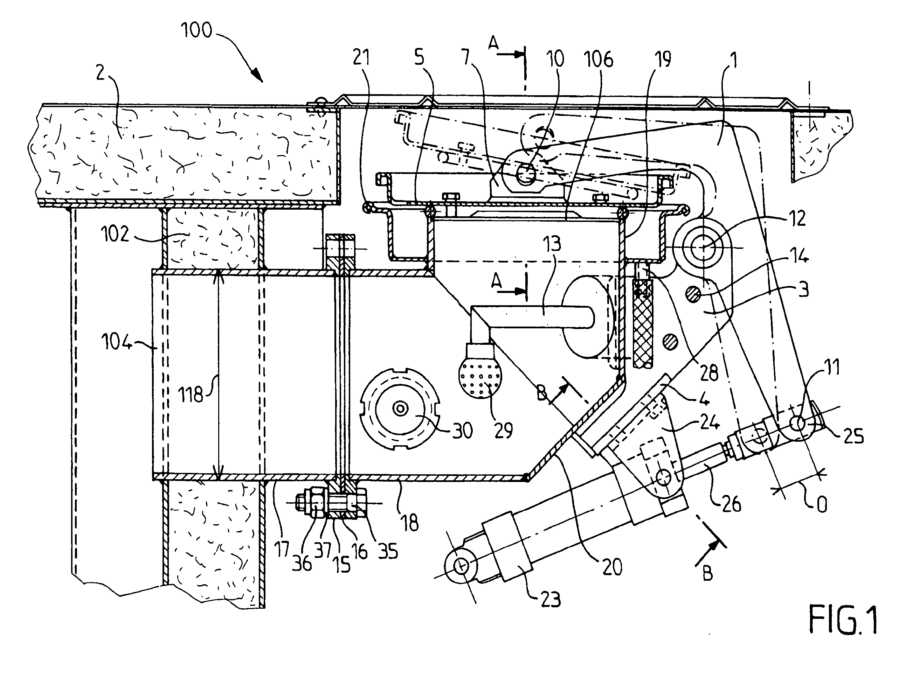

Le dispositif (100) selon l'invention, illustré figure 1, est un dispositif de mise à l'air libre pour une citerne (2), et notamment une citerne de camion, de semi-remorque ou de remorque.

Ce dispositif est positionné, de préférence, à l'extrémité supérieure arrière de la citerne.

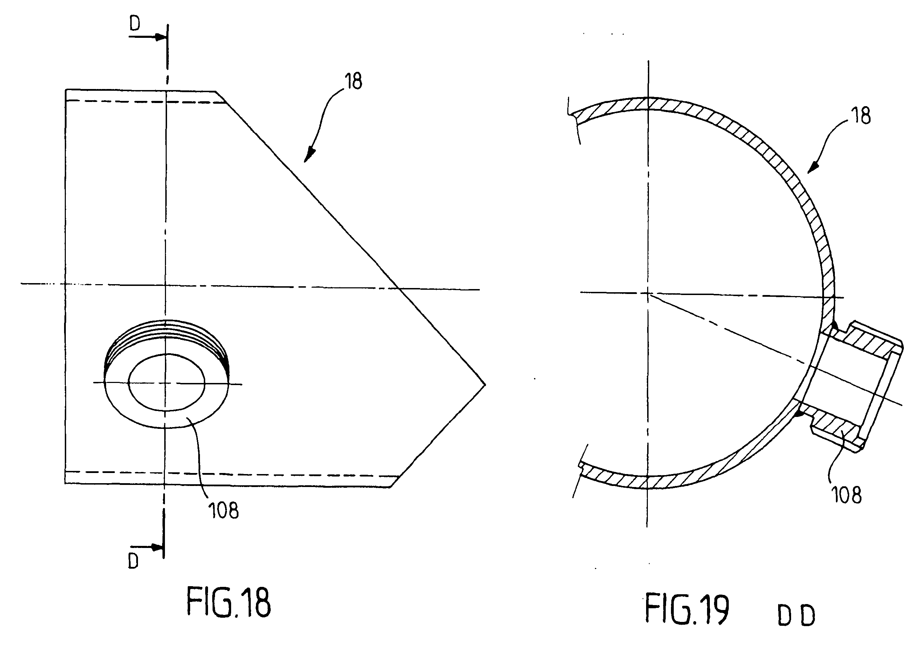

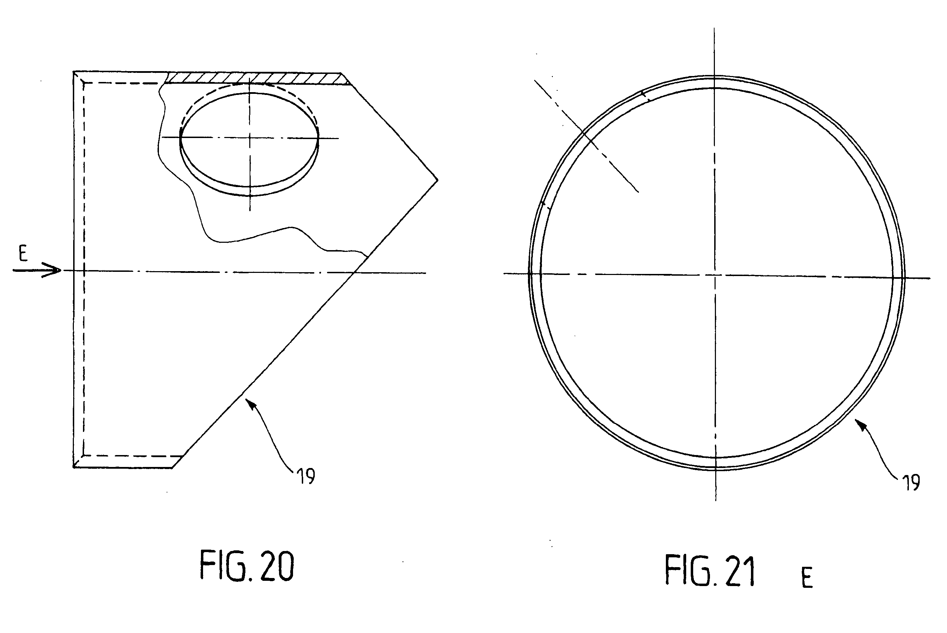

Le dispositif (100) est constitué d'un premier tube (18) cylindrique, visible sur les figures 18 et 19, dont l'extrémité libre forme une extrémité proximale (104) du dispositif et un second tube (19) cylindrique, visible sur les figures 20 et 21, dont l'extrémité libre forme une extrémité distale (106) du dispositif. Les deux tubes (18, 19) présentent un diamètre extérieur (118) identique, d'environ 133 mm, et une épaisseur identique d'environ 4 mm.

Comme on peut le constater, chaque tube est coupé en biseau à angle droit.

Ces tubes sont positionnés de manière à ce que leurs axes respectifs soit sécants à 90° et sont assemblés par soudage. L'assemblage est complété à l'aide d'une tôle (20) en ellipse présentant un grand diamètre de 114 mm et un petit diamètre de 94 mm.

L'extrémité proximale (104) est reliée avec l'intérieur de ladite citerne (102). Le tube (18) traverse la paroi arrière (102) calorifugée de la citerne (102). L'axe du tube (18) est sensiblement horizontal.

Le dispositif (100) comporte à son extrémité distale (106) un bouchon étanche (5), circulaire, mobile entre une position de fermeture et une position d'ouverture à l'aide d'au moins un vérin (23).

Sur la figure 1, le bouchon (5) est illustré en position de fermeture par des traits pleins et en position d'ouverture par des traits pointillés. En position de fermeture, le bouchon (5) ferme hermétiquement l'extrémité distale (106).

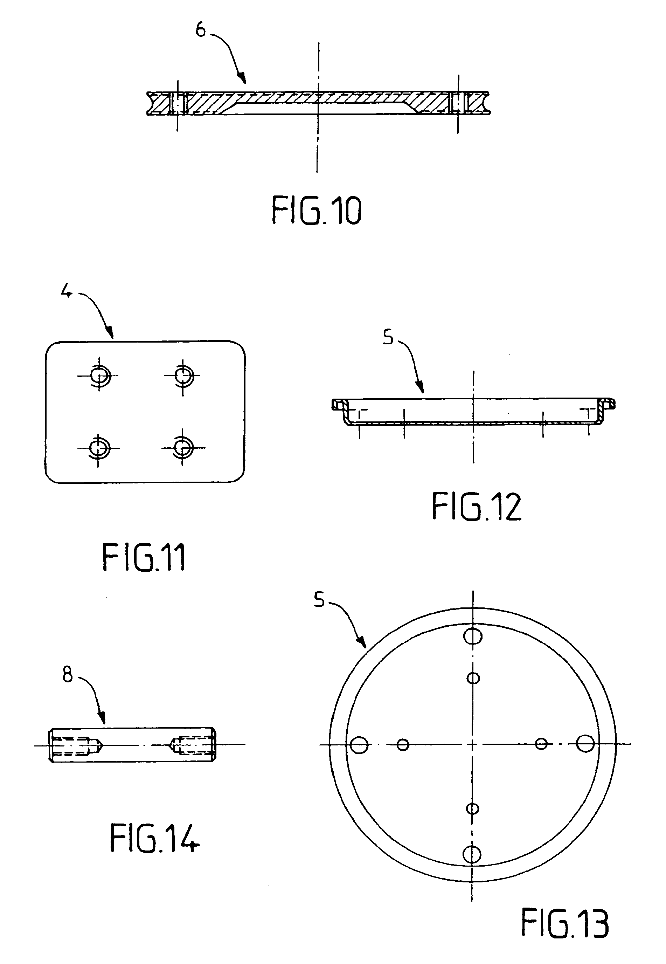

Ce bouchon (5), illustré figures 12 et 13, présente une forme de coupelle avec un rebord orienté vers le haut et présentant un retour vers le bas. Le diamètre de ce bouchon (5) est supérieur au diamètre du tube (19).

Ce bouchon (5) supporte un opercule (6) circulaire, visible figure 10, présentant un diamètre légèrement inférieur au diamètre intérieur du tube (19), d'environ 120 mm. Le rebord de cet opercule n'est pas droit mais semi-circulaire, afin de permettre d'accueillir un joint (27) circulaire, de section torique, présentant un diamètre intérieur de l'ordre de 117 mm et une section d'environ 7 mm.

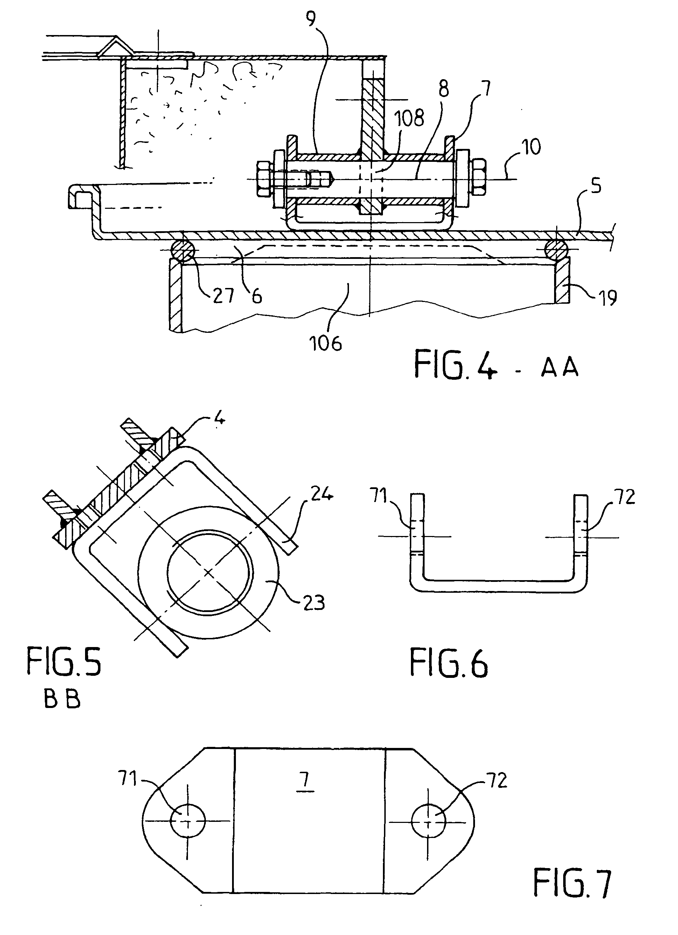

La figure 4 illustre une vue en coupe du bouchon (5) fermé.

Un plateau annulaire de récupération d'égouttures (21), visible figure 1, est positionné à l'extrémité supérieure du tube (19), coaxialement avec ce tube, afin de permettre de récupérer les fluides s'échappant éventuellement par l'extrémité distale. Ce plateau est percé à un endroit et présente à cet endroit un embout (28), afin de permettre d'évacuer les fluides échappés.

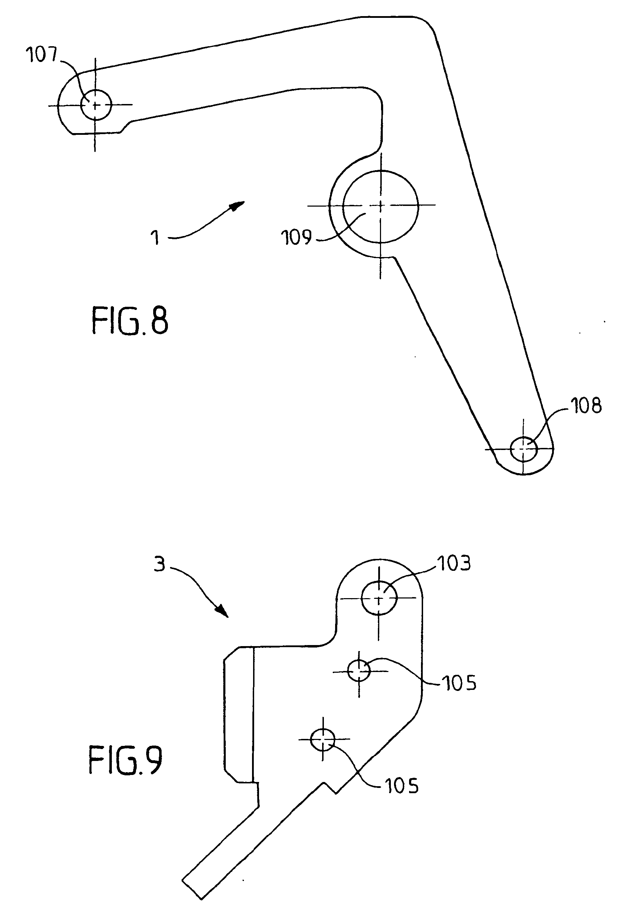

Le bouchon (5) est relié au vérin (20) par l'intermédiaire d'un levier d'articulation (1), illustré figure 8. Ce levier, en forme sensiblement d'équerre, présente à chaque extrémité des trous d'extrémité (107, 108), pour sa fixation respectivement au bouchon (5) et au vérin (23), ainsi que dans sa partie centrale un trou central (109).

Comme on peut le voir sur la figure 4, une chape d'articulation (7) présentant en coupe transversale une forme de U, visible figure 6, est soudée sur la face supérieure du bouchon (5). La figure 7 illustre cette chape d'articulation (7) à plat, avant mise en forme. La chape d'articulation (7) présente deux trous (71, 72), coaxiaux lorsque la chape est formée en U, afin de permettre d'introduire un axe cylindrique (8), surmonté d'une entretoise tubulaire (9). Tous ces éléments présentent chacun un axe parallèle à l'axe (10), de manière à assurer que le bouchon (5) soit bien présenté horizontalement pour la fermeture hermétique de l'extrémité distale (106).

L'extrémité de la tige du vérin est munie d'une chape d'articulation d'extrémité (25) présentant en coupe transversale une forme de U, afin de permettre de glisser un axe et d'assurer la rotation du bas du levier (1) par rapport à l'extrémité distale de la tige du vérin selon l'axe (11).

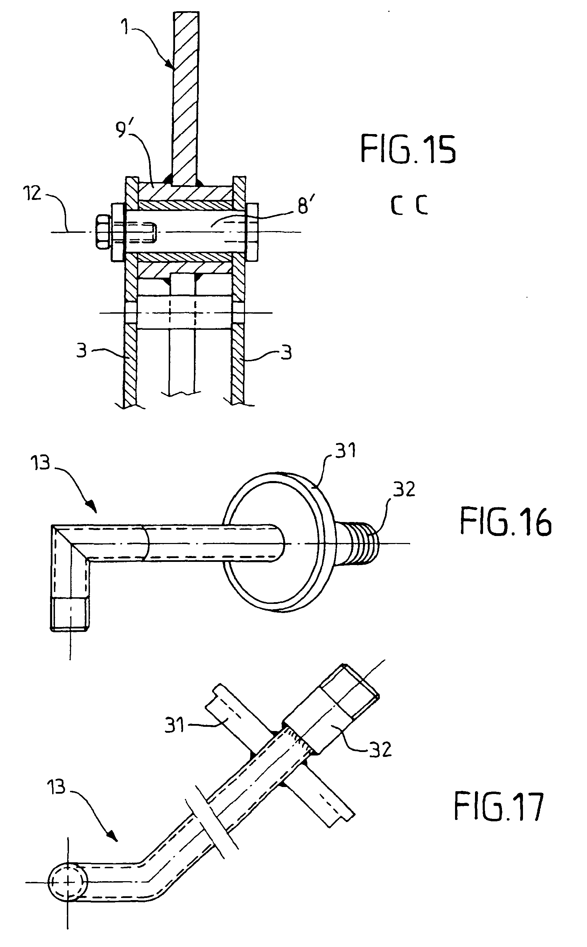

La partie centrale du levier (1) est reliée au tube (19) à l'aide de deux plaques de support (3), illustrées figure 9, identiques. Un axe cylindrique (8'), surmonté d'une entretoise tubulaire (9') est positionné entre les deux plaques de support (6) parallèles, dans les trous (103), de manière à assurer la rotation du levier (1) selon l'axe (12), comme illustré figure 15. Des entretoises (14) sont positionnées dans les autres trous (105) des supports (3).

Sur la figure 1, le levier (1) est également illustré en position de fermeture par des traits pleins et en position d'ouverture par des traits pointillés.

Comme on peut le voir sur la figure 5, le vérin (23) est fixé au dispositif (100) à l'aide d'une chape d'articulation centrale (24), sensiblement identique à la chape d'articulation (7), fixée au dispositif à l'aide d'une platine (4), illustrée figure 11. Ce vérin (23) présente à l'extrémité de sa tige une vis (26) permettant éventuellement un réglage en longueur et un ajustement de l'étanchéité.

Le vérin (23) présente une pression de fonctionnement à 4 bars. Il peut se déclencher afin de provoquer l'ouverture du bouchon (5) dès que la pression au niveau du bouchon est supérieure à environ 0,3 bar.

Il assure ainsi une fonction de soupape de surpression, provoquant la mise à l'air libre dès que la pression interne et supérieure à une valeur déterminée, par exemple de 0,3 bar.

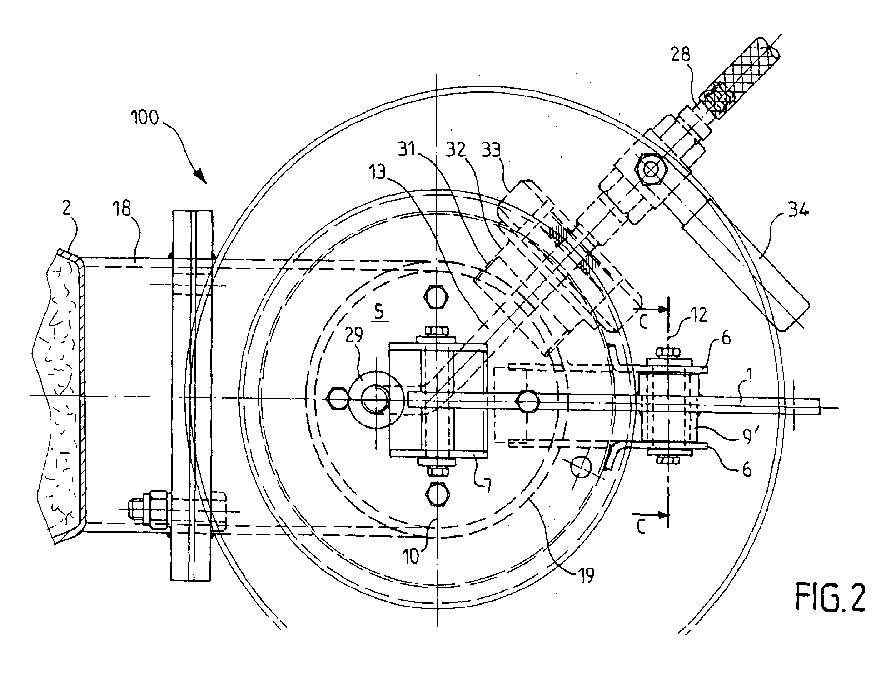

Le dispositif (100) comporte en outre à l'intérieur, un système de nettoyage interne, visible sur la figure 2, à l'aide d'une boule de projection (29), située à l'extrémité d'un tuyau de distribution (13), illustré figures 16 et 17.

Ce tuyau présente à l'extrémité opposée à la boule de projection une rondelle (31) et un filetage (32).

Cette extrémité est destinée à être vissée dans un écrou (33) afin de permettre de la fixer sur le tube (19). Cette extrémité est en outre reliée à un embout de distribution (28') et présent un robinet (34) type quart de tour permettant un réglage de débit.

Ce système de nettoyage interne est amovible, afin de permettre de le changer, au besoin, sans avoir à désassembler le dispositif (100) de la citerne.

Il est donc possible de raccorder l'embout de distribution (28') à un système de distribution de liquide de nettoyage, afin de projeter du liquide de nettoyage sur la face interne du dispositif (100), pour le nettoyer. Ce liquide s'écoule ensuite par l'extrémité proximale (104) dans la citerne et est évacué avec le liquide qui sert au nettoyage de l'intérieur de la citerne.

Le dispositif (100) comporte en outre, à l'intérieur, une sonde de détection de niveau (30). Cette sonde est vissée sur une ouverture filetée (108) ménagée dans le tube (18), comme on peut le voir sur les figures 18 et 19. Cette sonde est amovible, afin de permettre de la changer, au besoin, sans avoir à désassembler le dispositif (100) de la citerne.

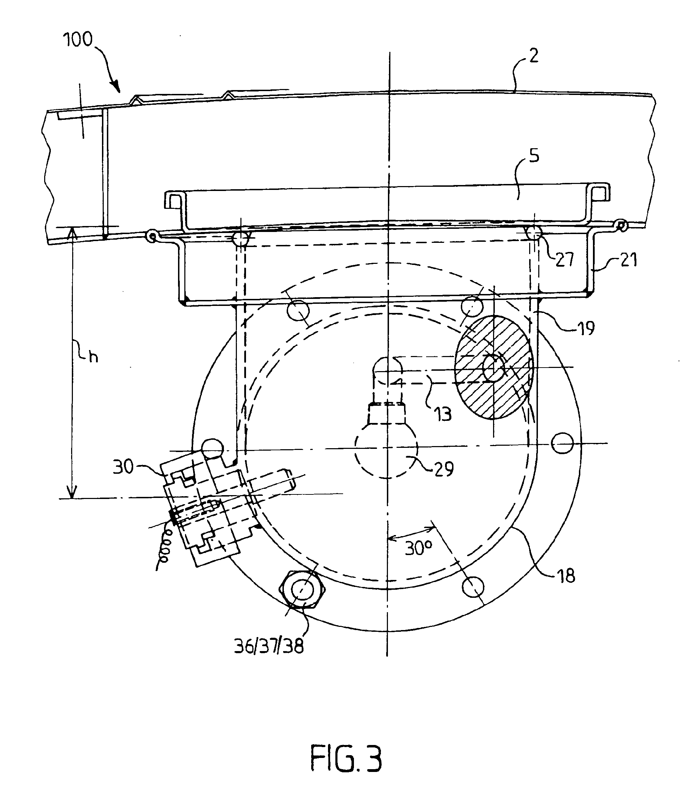

Cette sonde est reliée avec le système d'aspiration des fluides dans la citerne et permet, lorsque le niveau de fluide atteint une valeur souhaitée, de couper automatiquement l'aspiration des fluides, afin que la citerne ne déborde pas. Cette sonde est située à une hauteur h du haut de la citerne d'environ 135 mm, comme illustré sur la figure 3.

Comme on peut le voir sur la figure 1, l'extrémité proximale du tube (18) est complétée d'un tube (17) de même diamètre et de même épaisseur, inséré dans la paroi (102) de la citerne (2). Un joint d'étanchéité (16) est positionné entre les deux tubes (17, 18). Ces deux tubes sont assemblés à l'aide de vis (35), d'écrous (36) et de rondelles (37), afin de permettre de démonter, au besoin, le dispositif (100).

La quasi-totalité des pièces métalliques du dispositif (100) est en acier inoxydable, afin de satisfaire aux critères imposés pour le contact alimentaire, à l'exception de quelques pièces qui ne sont pas en contact avec le produit stocké dans la citerne.

L'invention est décrite dans ce qui précède à titre d'exemple. Il est entendu que l'homme du métier est à même de réaliser différentes variantes de l'invention sans pour autant sortir du cadre du brevet, comme défini par les revendications rattachées.

## Revendications

1. Dispositif (100) de mise à l'air libre pour une citerne (2), et notamment une citerne de camion, de semi-remorque ou de remorque, du type comportant au moins une extrémité proximale (104) reliée avec l'intérieur de ladite citerne et une extrémité distale (106) à l'air libre, ledit dispostif comportant à son extrémité distale (106) un bouchon étanche (5) mobile entre une position de fermeture et une position d'ouverture à l'aide d'au moins un vérin (23), ledit dispositif étant **caractérisé en ce que** ledit vérin (23) est un vérin de pression provoquant l'ouverture du bouchon (5) en cas de surpression à l'intérieur du dispositif.

2. Dispositif (100) de mise à l'air libre selon la revendication 1, **caractérisé en ce que** ledit bouchon (5) est monté sur un levier (1) mobile dont une extrémité est entraînée par ledit vérin (23).

3. Dispositif (100) de mise à l'air libre selon la revendication 2, **caractérisé en ce que** ledit levier (1) présente sensiblement une forme de L.

4. Dispositif (100) de mise à l'air libre selon l'une quelconque des revendications 1 à 3, **caractérisé en ce que** l'extrémité distale (106) est orientée sensiblement perpendiculairement à l'extrémité proximale (104).

5. Dispositif (100) de mise à l'air libre selon l'une quelconque des revendications 1 à 4, **caractérisé en ce que** ledit bouchon (5) comporte sur sa face inférieure un opercule (6) équipé d'un joint (27).

6. Dispositif (100) de mise à l'air libre selon l'une quelconque des revendications 1 à 5, **caractérisé en ce qu'**il comporte à l'intérieur une boule de projection de liquide (29).

7. Dispositif (100) de mise à l'air libre selon l'une quelconque des revendications 1 à 6, **caractérisé en ce qu'**il comporte une sonde de détection de niveau (30).

8. Citerne (102), et notamment une citerne de camion, de semi-remorque ou de remorque, équipée d'un dispositif (100) de mise à l'air libre selon l'une quelconque des revendications 1 à 7 comportant à son extrémité distale (106) un bouchon étanche (5) mobile entre une position de fermeture et une position d'ouverture à l'aide d'au moins un vérin (23).

## Claims

1. Venting assembly (100) for a tank (2), especially a tank mounted on a lorry, semi-trailer or trailer tanker, of the type comprising as a minimum a proximal end (104) connected to the interior of said tank and a distal or venting end (106), said assembly comprising at its distal end (106) an airtight closure (5) that can be moved between a closed position and an open position by at least one actuator (23), said assembly being **characterized in that** said actuator (23) is a pressure actuator that opens the closure (5) in the event of excess pressure inside the assembly.

2. Venting assembly (100) according to Claim 1, **characterized in that** said closure (5) is mounted on a movable lever (1), one end of which is driven by said actuator (23).

3. Venting assembly (100) according to Claim 2, **characterized in that** said lever (1) is essentially L-shaped.

4. Venting assembly (100) according to any one of Claims 1 to 3, **characterized in that** the distal end (106) is oriented essentially perpendicular to the proximal end (104).

5. Venting assembly (100) according to any one of Claims 1 to 4, **characterized in that** said closure (5) comprises on its underside a cap (6) fitted with a seal (27).

6. Venting assembly (100) according to any one of Claims 1 to 5, **characterized in that** it has a liquid spray ball (29) on its inside.

7. Venting assembly (100) according to any one of Claims 1 to 6, **characterized in that** it comprises a level detection probe (30).

8. Tank (102), especially a tank mounted on a lorry, semi-trailer or trailer tanker, equipped with a venting assembly (100) according to any one of Claims 1 to 7, comprising at its distal end (106) an airtight closure (5) that can be moved between a closed position and an open position by at least one actuator (23).

## Patentansprüche

1. Vorrichtung (100) zur Belüftung für einen Behälter (2), insbesondere einen Tank eines Lastkraftwagens, Sattelanhängers oder Anhängers, der Bauart mit mindestens einem proximalen Endabschnitt (104), der mit dem Inneren des genannten Behälters verbunden ist, und einem distalen Endabschnitt (106) in der freien Luft, wobei die Vorrichtung an ihrem distalen Endabschnitt (106) einen dichten Verschluss (5) aufweist, der zwischen einer Schließstellung und einer Öffnungsstellung mit Hilfe zumindest eines Zylinders (23) beweglich ist, wobei die genannte Vorrichtung **dadurch gekennzeichnet ist, dass** der genannte Zylinder (23) ein Druckzylinder ist, der die Öffnung des Verschlusses (5) im Falle eines Überdrucks im Inneren des Behälters hervorruft.

2. Vorrichtung (100) zur Belüftung nach Anspruch 1, **dadurch gekennzeichnet, dass** der genannte Verschluss (5) auf einem beweglichen Hebel (1) gehalten ist, dessen einer Endabschnitt durch den genannten Zylinder (23) bewegt wird.

3. Vorrichtung (100) zur Belüftung nach Anspruch 2, **dadurch gekennzeichnet, dass** der genannte Hebel (1) im Wesentlichen L-förmig ausgebildet ist.

4. Vorrichtung (100) zur Belüftung nach einem der Ansprüche 1 bis 3, **dadurch gekennzeichnet, dass** der distale Endabschnitt (106) im Wesentlichen senkrecht zu dem proximalen Endabschnitt (104) ausgerichtet ist.

5. Vorrichtung (100) zur Belüftung nach einem der Ansprüche 1 bis 4, **dadurch gekennzeichnet, dass** der genannte Verschluss (5) auf seiner Unterseite ein mit einer Dichtung (27) versehenes Verschlussorgan (6) aufweist.

6. Vorrichtung (100) zur Belüftung nach einem der Ansprüche 1 bis 5, **dadurch gekennzeichnet, dass** sie im Inneren eine Kugel zum Ausstoßen von Flüssigkeit (29) aufweist.

7. Vorrichtung (100) zur Belüftung nach einem der Ansprüche 1 bis 6, **dadurch gekennzeichnet, dass** sie eine Sonde zur Niveauerfassung (30) aufweist.

8. Behälter (102), insbesondere ein Behälter eines Lastkraftwagens, eines Sattelanhängers oder eines Anhängers, der mit einer Vorrichtung (100) zur Belüftung nach einem der Ansprüche 1 bis 7 ausgestattet ist, die an ihrem distalen Endabschnitt (106) einen dichten Verschluss (5) aufweist, der zwischen einer Schließposition und einer Öffnungsposition mit Hilfe zumindest eines Zylinders (23) bewegbar ist.
